# EUROPEAN PATENT APPLICATION

(11) **EP 2 918 463 A1**
(43) Date of publication of application: **16.09.2015**
(21) Application number: 13854052.1
(22) Date of filing: 08.10.2013
(51) Int. Cl.: B60W 10/06, B60L 11/14, B60W 20/00, F02D 29/02

(54) **VEHICLE CONTROL APPARATUS**

(30) Priority: 12.11.2012 JP 2012248144
(71) Applicant: KABUSHIKI KAISHA TOYOTA JIDOSHOKKI, Kariya-shi, Aichi 448-8671 (JP)
(72) Inventor: UETSUJI, Kiyoshi, Kariya-shi Aichi 448-8671 (JP); KUBO, Hidehito, Kariya-shi Aichi 448-8671 (JP); HAYASHI, Hirohito, Kariya-shi Aichi 448-8671 (JP); MATSUMOTO, Shohei, Kariya-shi Aichi 448-8671 (JP); YUMOTO, Shuji, Kariya-shi Aichi 448-8671 (JP); YOSHIHARA, Koji, Kariya-shi Aichi 448-8671 (JP); FUJIWARA, Hirofumi, Kariya-shi Aichi 448-8671 (JP)
(74) Representative: TBK
(86) International application number: PCT/JP2013/077331
(87) International publication number: WO 2014/073309

(57) **Abstract**

An engine is started to meet the driver' s benefit in a vehicle control device for executing a control for starting the engine automatically if the engine has not been started for a predetermined period. The vehicle control device 10 stores the date when the engine 40 (internal combustion engine) was last started (internal combustion engine start date) . The vehicle control device 10 starts the engine 40 automatically upon movement of the vehicle after five weeks (first period) have elapsed from the internal combustion engine start date.

## Description

### Technical Field

The present invention relates to a vehicle control device and in particular to one with a function for starting an engine automatically.

### Background Art

In a vehicle using an engine, it is undesirable for gasoline or for the engine that the engine has not been started for long periods. Examples of reasons for this are that components of gasoline change by evaporation or oxidation, that the engine runs out of lubricant, etc.

The engine of a range extender vehicle (hereinafter "RE vehicle") or a plug-in hybrid vehicle (hereinafter "PHV") is not started unless the movement distance becomes greater than the travel range of the battery after the battery is fully charged. Therefore, if movement distance per charging operation is shorter than the travel range of the battery and if such movements are repeated, the engines may not be started for long periods even if the vehicle moves frequently. Such a situation is more likely to occur in such vehicles than in a normal gasoline-engine vehicles.

In order to avoid such a situation, a technique for starting the engine automatically if the engine has not been started for a predetermined period is known. An example of such a technique is described in Patent Document 1.

### Conventional Art Documents

### [Patent Documents]

[Patent Document 1] US Patent Application Laid-Open No. 2011/0066352

### Summary of the Invention

### Problems to be solved by the Invention

However, conventional techniques have a problem of not meeting the driver's benefit because the engine is started automatically regardless of whether the vehicle is moving or not. For example, if a driver expects reduction of gasoline consumption by an RE vehicle or a PHV, it is counter to the driver' s expectations if the engine is forcibly started so that the engine consumes gasoline while the vehicle is stopped. This is counter to the driver's benefit. Note here that "benefit" includes benefits basaed on the driver's subjective and may not always be consistent with whether such control objectively contributes to reduction of gasoline consumption.

The present invention is made in order to solve the above problem and is aimed at starting the engine to meet the driver's benefit if the engine has not been started for a predetermined period.

### Means for Solving the Problems

In order to solve the above problems, a vehicle control device related to the present invention is a vehicle control device mounted to a vehicle, wherein:
- the vehicle comprises:
   an internal combustion engine;
   a battery; and
   a motor generator or a motor and a generator;
- the vehicle control device stores an internal combustion engine start date representing a date when the internal combustion engine was last started; and
- the vehicle control device comprises a first control function which is a function for starting the internal combustion engine upon movement of the vehicle after a first period has elapsed from the internal combustion engine start date.

In accordance with such a construction, the engine is started automatically upon movement of the vehicle after the first period has elapsed.

### Effect of the Invention

In accordance with the vehicle control device of the present invention, the engine is started upon movement of the vehicle after the first period has elapsed. Accordingly, the engine can be started to meet the driver's benefit. Also, a situation wherein the engine is not started for a long period of time can be prevented.

### Brief Description of the Drawings

Fig. 1 is a diagram showing a construction including a vehicle control device related to a first embodiment of the present invention.
Fig. 2 is a flowchart representing a process flow of the vehicle control device of Fig. 1.
Fig. 3 is a diagram showing a construction including a vehicle control device related to a variation of the first embodiment.

### Embodiments of the Invention

Embodiments of the present invention will be explained below with reference to the attached drawings.

### First Embodiment

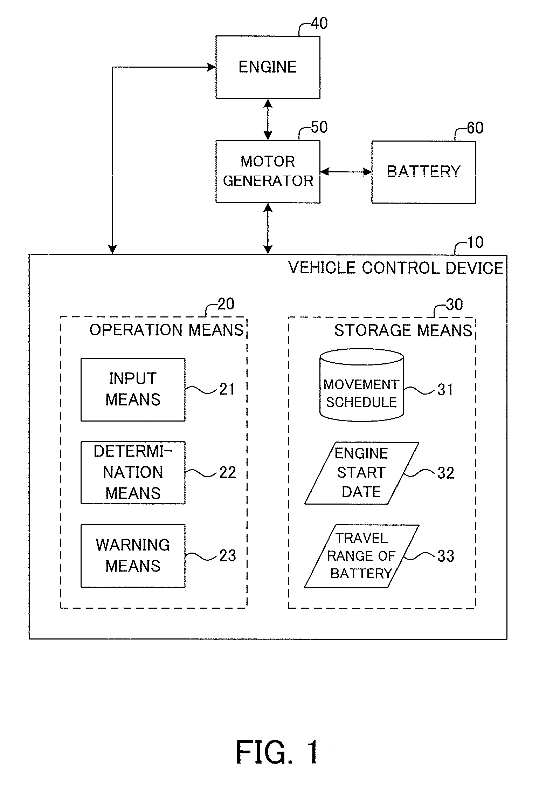

Fig. 1 shows a construction including a vehicle control device 10 related to a first embodiment of the present invention. The vehicle control device 10 is mounted to a vehicle and controls operation of the vehicle. The vehicle comprises the vehicle control device 10, an engine 40 (internal combustion engine), a motor generator 50 and a battery 60. The vehicle control device 10 is connected to the engine 40 and the motor generator 50 and controls them. The motor generator 50 comprises a function for driving the engine 40 with electric power supplied from the battery 60 and a function for generating electric power by power of the engine 40 and charging the electric power to the battery 60. An inverter may be provided between the motor generator 50 and the battery 60.

The vehicle control device 10 has a construction as a known computer and comprises operation means 20 and storage means 30. The operation means 20 is for example a microprocessor and functions as input means 21 for receiving input of schedule, determination means 22 for performing determination regarding a date or the like and warning means 23 for issuing warning regarding automatic starting of the engine 40.

The storage means 30 is for example a semiconductor storage medium and stores movement schedule 31, engine start date 32 (internal combustion engine start date) and travel range of the battery 33. The movement schedule 31 includes one or more dates when it is planned to move the vehicle (planned movement date) and information representing planned movement distance for each planned movement date. The information representing the planned movement distance is for example coordinate data representing source and destination of the movement and can be defined for example in a format consistent with a known GPS system. Those skilled in the art can design a method for calculating the movement distance based on the coordinate data representing the source and the destination of the movement as needed.

The engine start date 32 is a value representing the date when the engine 40 was last started.

Those skilled in the art can define or specify the travel range of the battery 33 as needed. For example, it is a value representing a distance which the vehicle can move solely by electric power after the battery 60 is charged to a predetermined state (e.g. a fully charged state) until the charged amount becomes zero or an amount with which the vehicle is unable to move.

The input means 21 has a function for receiving input of the movement schedule 31 from a user such as a driver. The input can be performed via a known interface. The input may be performed via a touch panel used in a car navigation system or the like, may be performed wirelessly via a smartphone or may be performed from an external computer (such as a PC located in the driver's home) via a signal line attached to a charging cable.

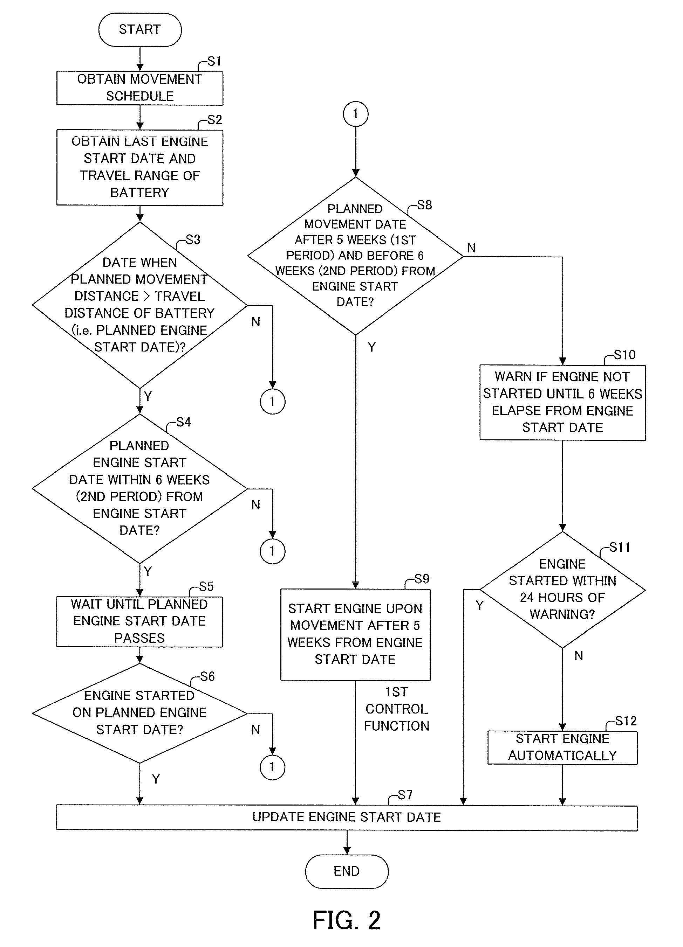

Fig. 2 is a flowchart representing a process flow of the vehicle control device 10. Execution of the process in Fig. 2 is started for example every time an ignition switch of the vehicle is turned on.

First, the vehicle control device 10 obtains the movement schedule 31 (Step S1). Also, the vehicle control device 10 obtains the engine start date and the travel range of the battery (Step S2).

Next, the vehicle control device 10 functions as the determination means 22 and determines whether there is any date for which the planned movement distance is greater than the travel range of the battery among the planned movement date (s) by referring to the movement schedule 31 (Step S3). Such date can be viewed as a planned engine start date because it can be thought it may be necessary to start the engine 40 on that date.

If there is any planned engine start date, the determination means 22 determines whether the planned engine start date exists within a predetermined period (a second period) from the engine start date (Step S4). If there are a plurality of planned engine start dates, the determination means 22 determines whether at least one of them exists within the predetermined period. The second period is six weeks in the present embodiment. This period represents a period where gasoline or the engine would be adversely affected if the engine has not been started for that period. Those skilled in the art can determine this period as needed.

If the planned engine start date exists within the six weeks, the determination means 22 waits until the planned engine start date passes (Step S5). If there are a plurality of such planned engine start dates, the determination means 22 waits until all of them pass.

Then the determination means 22 determines whether the engine 40 was started on the planned engine start date (Step S6). If it was, the determination means 22 updates the engine start date stored in the storage means 30 (Step S7). In other words, the determination means 22 stores the value of the planned engine start date as a new engine start date.

If it is determined in Step S3 that the engine start date does not exist, if it is determined in Step S4 that there is no planned movement dates within the six weeks or if it is determined in Step S6 that the engine 40 was not started on the planned engine start date, the determination means 22 determines whether any planned movement date exists within a predetermined period (after the first period elapsed and before the second period elapses from the engine start date) (Step S8). The first period is five weeks in the present embodiment but those skilled in the art can determine the first period as needed. However, it is assumed that the first period is equal to or less than the second period.

If there is a planned movement date in said period, the determination means 22 starts the engine 40 upon movement of the vehicle after the five weeks elapsed from the engine start date within said period (Step S9). The function of Step S9 is a first control function. The first control function is, for example, a function for:
- if the vehicle is not moving in the instant when the five weeks have elapsed from the engine start date, starting the engine 40 when the vehicle first starts moving after that instant; and
- if the vehicle is moving in the instant when the five weeks have elapsed from the engine start date, starting the engine 40 in that instant.
However, the first control function is not limited strictly to the above function. For example, if the vehicle is moving in the instant when the five weeks have elapsed from the engine start date, the engine 40 may be started after a predetermined time (e.g. after several minutes) from that instant. Note that the starting of the engine 40 according to this control would not be against the driver' s benefit even if it is a forcible and automatic start independent of the driver's will because the starting would not be performed unless the vehicle is moving.

Note that branching similar to Step S6 may be provided after Step S9. For example, if the vehicle has not moved until the six weeks elapse from the engine start date and as a result the first control function is not executed, the process may proceed to Step S10.

After executing Step S9, the determination means 22 updates the engine start date stored in the storage means (Step S7 described above).

As is clear from the above, the control of Step S9 would not be executed if the process branches in the downward direction in Steps S3 and S4 (i.e. if it is determined that the planned engine start date exists within six weeks from the engine start date). That is, if there is any such planned engine start date, the control of Step S9 is not executed until the planned engine start date passes even after the five weeks elapsed from the engine start date. As a result, the engine 40 would not be started even if the five weeks elapsed without any starting of engine 40 and then the vehicle is moved, unless there is some other reason.

If the planned movement date does not exist after five weeks elapsed and before six weeks elapse in Step S8, the warning means 23 issues a warning if the engine 40 has not been started within six weeks (Step S10). This warning is issued for example when an ignition switch is turned on. Content of the warning includes for example information indicating that six weeks have elapsed from the engine start date and information indicating that a control for automatically starting the engine 40 will be executed if the engine 40 is not started within twenty four hours from the time the warning was issued. Also, the warning is issued for example via a known interface (such as a touch panel and a speaker).

Next, the determination means 22 determines whether the engine has been started within twenty four hours of the warning (Step S11). Here, if the vehicle is moved within twenty four hours of the warning, the engine 40 may be started automatically by proceeding to Step S9.

If the vehicle is moved within twenty four hours of the warning, the determination means 22 updates the engine start date stored in the storage means 30 (Step S7 described above). On the other hand, if the vehicle is not moved until twenty four hours elapse, the determination means 22 starts the engine 40 automatically after the twenty four hours elapse (Step S12). Execution of the process of Step 12 may be postponed if the ignition switch is off. In this case, the process of Step S12 may be executed when the ignition switch is turned on.

An example of actual operation of the vehicle control device 10 in accordance with the above flowchart will be explained below. Here, a date of "March 24th" (e.g. in 2013, same hereinafter) is stored as the engine start date 32. Also, a value of "200km" is stored as the travel range of the battery 33.

Further, the following content is stored as the movement schedule 31:
- March 25th through April 28th: a round trip between home and office on each weekday (movement distance 20km) and no movement days off;
- May 1st: movement from home to a tourist spot (movement distance 300km);
- May 2nd and May 3rd: no movement;
- May 4th: movement from the tourist spot to home (movement distance 300km); and
- May 5th through August 11th: a round trip between home and office on each weekday (movement distance 20km) and no movement days off.

In this example, the planned engine start dates (i.e. the dates for which the movement distance is greater than the travel range of the battery (200km)) are May 1st and May 4th, both of which fall within the period after five weeks elapsed and before six weeks elapse from the engine start date (March 24th). Accordingly, the process proceeds to Step S5 and the automatic starting of the engine 40 is not executed even if the vehicle is moved, until May 4th passes. If the engine 40 has not been started on May 1st and on May 4th as planned, the engine 40 will be started when the vehicle is moved after May 4th (i.e. on May 5th) by Step S9. Further, if the vehicle is not moved and engine 40 has not been started until six weeks elapse (i.e. until after May 5th), the process will proceed to Step S10 and the engine 40 will be started automatically after the warning.

Thus, the vehicle control device 10 according to the first embodiment of the present invention determines when the engine can be started efficiently based on the movement schedule 31 by storing and referring to the movement schedule 31, so the engine 40 can be started automatically in response to the determined result. In the above example, the automatic starting of the engine 40 will not be executed until after the planned engine start date (May 4th) even if the vehicle is moved, so mileage can be improved by reducing gasoline consumption. Also, the engine 40 will be started when the vehicle is moved after the planned engine start date passes and before six week elapse, so the engine 40 can be started to meet the driver's benefit. Further, if six weeks has elapsed, the engine will be started regardless of the movement of the vehicle, so bad effects on the engine 40, etc. can be more reliably avoided.

The following modifications can be made to the first embodiment described above.

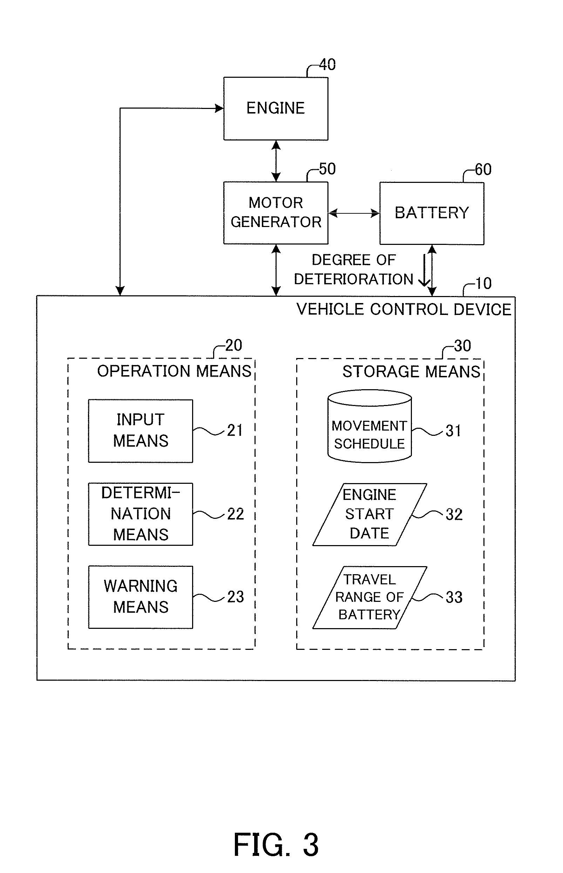

The vehicle control device 10 may further be connected to the battery 60 to control the battery 60. Also, the vehicle control device 10 may comprise a function for obtaining information representing a condition of the battery 60 such as information about the degree of deterioration of the battery 60 as shown in Fig. 3. The battery 60 may be deteriorated by repeated charging and discharging, in which case the travel range of the battery may vary. However, even in such a case, the vehicle control device 10 enables a vehicle control more suitable to conditions of the battery 60 by obtaining the information about the degree of deterioration and utilizing this information in the control. For example, the vehicle control device 10 may comprise a function for determining the travel range of the battery 33 based on the obtained degree of deterioration and a function for storing the determined travel range of the battery 33 in the storage means 30 (or a function for updating the travel range of the battery 33 stored in the storage means 30).

Also, the motor generator 50 may be constructed so that a motor and a generator are provided separately.

The first period (five weeks) and the second period (six weeks) can be changed as needed. In particular, the invention may be constructed so that the driver can change the first period. In this case, the input means 21 may receive input of a value representing the first period and store the value in the storage means 30. In such a construction, depending on the driver's preference, the first period can be shorter so that the engine 40 is automatically started more frequently to reduce frequency of the warnings or can be longer so that mileage is improved.

Although the planned engine start date is determined in units of days in the first embodiment, it may be determined in units of charging opportunities. For example, if it is expected that there is no charging opportunity (e.g. the vehicle does not come home) for a plurality of days, a planned engine start period may be determined in units of periods between a charging opportunity and the next charging opportunity and used instead of the planned engine start date. In such a construction and in the operation example of the first embodiment, the period from May 1st to May 5th would be treated as a single planned engine start period.

## Claims

1. A vehicle control device mounted to a vehicle, wherein:
- the vehicle comprises:
an internal combustion engine;
a battery; and
a motor generator or a motor and a generator;
- the vehicle control device stores an internal combustion engine start date representing a date when the internal combustion engine was last started; and
- the vehicle control device comprises a first control function for starting the internal combustion engine upon movement of the vehicle after a first period elapses from the internal combustion engine start date.

2. The vehicle control device of Claim 1, further comprising:
- a function for issuing a warning if the internal combustion engine has not been started within a second period longer than the first period from the internal combustion engine start date; and
- a function for starting the internal combustion engine after a predetermined time has elapsed from the warning.

3. The vehicle control device of Claim 1, wherein:
- the vehicle control device stores a movement schedule and a travel range of the battery;
- the movement schedule includes one or more planned movement dates and information representing planned movement distance for each planned movement date;
- the vehicle control device determines whether a planned internal combustion engine start date exists within a second period longer than the first period from the internal combustion engine start date, the planned internal combustion engine start date being a date among the planned movement dates for which the planned movement distance is greater than the travel range of the battery; and
- if the planned internal combustion engine start date exists within the second period from the internal combustion engine start date, the vehicle control device does not execute the first control function until the planned internal combustion engine start date passes even if the first period has elapsed from the internal combustion engine start date.

4. The vehicle control device of Claim 3, wherein the vehicle control device executes the first control function if the planned movement date exists within the second period from the internal combustion engine start date.

5. The vehicle control device of Claim 3, further comprising:
- a function for obtaining information about a degree of deterioration of the battery; and
- a function for determining the travel range of the battery based on the degree of deterioration.
